# EUROPÄISCHE PATENTSCHRIFT

(11) **EP 3 977 217 B1**
(45) Veröffentlichungstag und Bekanntmachung des Hinweises auf die Patenterteilung: **12.07.2023**
(21) Anmeldenummer: 20731798.3
(22) Anmeldetag: 14.05.2020
(51) Int. Cl.: G05B 19/4061, G05B 19/4065

(54) **STEUERVORRICHTUNG ZUM EINSATZ AN EINER NUMERISCH GESTEUERTEN WERKZEUGMASCHINE UND WERKZEUGMASCHINE MIT EINER STEUERVORRICHTUNG**
CONTROL DEVICE FOR USE ON A NUMERICALLY CONTROLLED MACHINE TOOL, AND MACHINE TOOL COMPRISING A CONTROL DEVICE
DISPOSITIF DE COMMANDE DESTINÉ A ÊTRE UTILISÉ SUR UNE MACHINE-OUTIL À COMMANDE NUMÉRIQUE ET MACHINE-OUTIL AVEC UN DISPOSITIF DE COMMANDE

(30) Priorität: 13.06.2019 DE 102019208624
(43) Veröffentlichungstag der Anmeldung: 06.04.2022
(73) Patentinhaber: Deckel Maho Seebach GmbH, 99846 Seebach (DE)
(72) Erfinder: BRAND, Matthias, 99846 Seebach (DE); SCHMIDT, Ines, 99880 Waltershausen (DE); GLÖDE, Isabella, 99848 Wutha-Farnroda (DE)
(74) Vertreter: MERH-IP Matias Erny Reichl Hoffmann Patentanwälte PartG mbB
(86) Internationale Anmeldenummer: PCT/EP2020/063417
(87) Internationale Veröffentlichungsnummer: WO 2020/249354

(56) Entgegenhaltungen:
- US-A1- 2018 067 471
- US-A1- 2018 157 226
- US-A1- 2018 264 613

## Beschreibung

### Beschreibung

Die vorliegende Erfindung betrifft eine Steuervorrichtung zum Einsatz an einer numerisch gesteuerten Werkzeugmaschine und eine Werkzeugmaschine mit einer derartigen Steuervorrichtung, insbesondere zur Überwachung der numerisch gesteuerten Werkzeugmaschine, insbesondere mittels einer Überwachungseinrichtung der Steuervorrichtung. Ferner betrifft die vorliegende Erfindung ein Verfahren zur Überwachung einer numerisch gesteuerten Werkzeugmaschine, insbesondere mittels einer Steuervorrichtung bzw. einer Überwachungseinrichtung der Steuervorrichtung, sowie ein entsprechendes Computerprogrammprodukt für eine Steuervorrichtung einer Werkzeugmaschine.

### Hintergrund

Numerisch gesteuerte Werkzeugmaschinen für die zerspanende Werkstückbearbeitung, wie z.B. Fräsmaschinen, Drehmaschinen, Fräs-/Drehmaschinen, Schleifmaschinen, Universalwerkzeugmaschinen, Drehzentren, Bearbeitungszentren, Verzahnungsmaschinen, usw., sind im Stand der Technik bekannt.

Derartige gattungsgemäße Werkzeugmaschinen bzw. CNC-Werkzeugmaschinen weisen typischerweise eine Steuervorrichtung (Maschinensteuerung) zum Einsatz an der numerisch gesteuerten Werkzeugmaschine auf, umfassend eine Maschinensteuerungseinrichtung zum Steuern von Aktoren, insbesondere Antrieben wie Spindelantriebe und Achsantriebe von Linear-, Rund- und Schwenkachsantriebe, der Werkzeugmaschine für einen Bearbeitungsprozess einer Werkstückbearbeitung, insbesondere auf Grundlage von Steuerdaten bzw. auf Grundlage von ein NC-Programm umfassenden Steuerdaten.

Hierbei ist z.B. aus der EP 2 482 156 A1 bekannt, während der Bearbeitung des Werkstücks an der Werkzeugmaschine eine Prozessüberwachung durchzuführen, insbesondere um eine Kollisionsüberwachung an der Werkzeugmaschine durchzuführen. Beispielhaft kann dies gemäß der Lehre EP 2 482 156 A1 auf Grundlage eines eine Vibration messenden Kollisionssensors durchgeführt werden, wobei das Sensorsignal bei Bearbeitung des Werkstücks während des Betriebs der Werkzeugmaschine kontinuierlich mit einem oder mehreren Grenzwerten verglichen wird und bei Überschreiten des Grenzwerts eine Kollision erkannt werden kann.

Aus der EP 2 482 156 A1 ist somit eine gattungsgemäße Steuervorrichtung bzw. Werkzeugmaschine mit einer derartigen Steuervorrichtung bekannt, die eine Maschinensteuerungseinrichtung zum Steuern von Aktoren der Werkzeugmaschine für einen Bearbeitungsprozess einer Werkstückbearbeitung an der Werkzeugmaschine, insbesondere auf Grundlage von Steuerdaten, und eine Überwachungseinrichtung zum Überwachen der Werkzeugmaschine auf Grundlage von Sensordaten eines Kollisionssensors umfasst.

Aus der US 2018/157226 A1 ist ferner eine Steuervorrichtung mit Überwachungseinrichtung bekannt, die derart zur Maschinenüberwachung einer Werkzeugmaschine eingerichtet ist, dass auf mögliche Kollision einzelner Maschinenteile der Werkzeugmaschine bei einer manuell erfolgenden Bedienung hingewiesen wird, um diese zu verhindern.

Aus der US 2018/0264613 A1 ist überdies eine Steuervorrichtung mit Überwachungseinrichtung bekannt, die im Falle eines im Zuge einer Maschinenüberwachung erkannten Problems zur Ausgabe eines Alarms eingerichtet ist.

Aus der US 2018/067471 A1 ist weiterhin eine Steuervorrichtung mit Überwachungseinrichtung zur Prozessüberwachung, die eingerichtet ist, nach einem Bearbeitungsprozess einen Werkzeugwechsel an der Werkzeugmaschine zu initiieren, falls bei diesem ein Problem detektiert wurde.

Grundsätzlich ist es bei der Prozessüberwachung an Werkzeugmaschinen erwünscht, den Bearbeitungsprozess an der Werkzeugmaschine derart zu überwachen, dass unterschiedlichste potentiell bei während der Werkstückbearbeitung auftretende Probleme, wie z.B. Kollision, Lagerverschleiß bzw. auftretender Lagerschaden, Werkzeugverschleiß, Werkzeugbruch, Spannmittelbruch, Antriebsschaden, usw., schnell erkannt und möglichst zuverlässig identifiziert werden können bzw. schnell auf derartige Probleme reagiert werden kann, z.B. durch automatischen Antriebsstopp oder gar automatischen Maschinenstopp, wobei zusätzlich etwaige Stillstandzeiten durch etwaige Fehlerkennungen zu vermeiden sind.

Ausgehend von dem vorstehenden Stand der Technik ist es daher eine Aufgabe der vorliegenden Erfindung, eine Prozessüberwachung an einer Werkzeugmaschine bereitzustellen, die gegenüber dem Stand der Technik verbessert wird, und insbesondere schneller, genauer, variabler und/oder sensibler auf bei der Prozessbearbeitung auftretende Probleme reagieren kann und diese besser erkennen kann und/oder Fehlerkennungen bei zuverlässiger Prozessüberwachung besser vermeidet.

### Zusammenfassung

Gemäß der vorliegenden Erfindung werden eine Steuervorrichtung zum Einsatz an einer numerisch gesteuerten Werkzeugmaschine, eine entsprechende Werkzeugmaschine, ein Verfahren zur Überwachung einer Werkzeugmaschine und ein entsprechendes Computerprogrammprodukt gemäß den unabhängigen Ansprüchen vorgeschlagen. Abhängige Ansprüche betreffen bevorzugte beispielhaft Ausführungsformen der vorliegenden Erfindung, die individuell oder auch in Kombination bereitgestellt werden können.

Gemäß einem Aspekt der vorliegenden Erfindung wird eine Steuervorrichtung zum Einsatz an einer numerisch gesteuerten Werkzeugmaschine vorgeschlagen, umfassend: eine Maschinensteuerungseinrichtung zum Steuern von Aktoren der Werkzeugmaschine für einen Bearbeitungsprozess einer Werkstückbearbeitung an der Werkzeugmaschine, insbesondere auf Grundlage von Steuerdaten in Form eines NC-Programms, und eine Überwachungseinrichtung zum Überwachen eines Betriebszustands der Werkzeugmaschine.

Erfindungsgemäß weist die Überwachungseinrichtung der Steuervorrichtung ein computer-implementiertes neuronales Netz bzw. künstliches neuronales Netz auf, das dazu eingerichtet ist, Eingabedaten aus der Maschinensteuerungseinrichtung einzulesen und einen Betriebszustand der Werkzeugmaschine angebende Ausgabedaten auszugeben, wobei das neuronale Netz der Überwachungseinrichtung dazu eingerichtet ist, zur Prozessüberwachung an der Werkzeugmaschine den Betriebszustand der Werkzeugmaschine angebende Ausgabedaten zur Erkennung von Fehlern im Bearbeitungsprozess auszuwerten.

Das neuronale Netz der Überwachungseinrichtung ist dazu eingerichtet ist, die Eingabedaten aus der Maschinensteuerungseinrichtung während des laufenden Bearbeitungsprozesses der Werkstückbearbeitung einzulesen und Ausgabedaten auszugeben, die einen momentanen Betriebszustand der Werkzeugmaschine bei der Werkstückbearbeitung angeben.

Weiterhin ist die Überwachungseinrichtung dazu eingerichtet ist, während des Bearbeitungsprozesses an der Maschinensteuerungseinrichtung vorliegende Prozessparameter des Bearbeitungsprozesses, die die Werkstückbearbeitung mittels einer ein Werkzeug oder ein Werkstück tragenden Arbeitsspindel der Werkzeugmaschine betreffen, auf Grundlage einer Auswertung der den momentanen Betriebszustand der Werkzeugmaschine angebenden Ausgabedaten durch das neuronale Netz anzupassen.

Es sei darauf verwiesen, dass die DE 10 2015 115 838 A1 bereits eine Verwendung eines neuronalen Netzes in Verbindung mit einer Werkzeugmaschine zu beschreiben scheint, wobei das neuronale Netz jedoch in einer Auswerteeinheit anscheinend zur Auswertung einer Temperaturmesswertverwaltung verwendet wird und dies - im Gegensatz zur vorliegenden Erfindung - in der DE 10 2015 115 838 A1 zum Zwecke der Kompensation bzw. Korrektur von temperaturbedingten Lageveränderungen an der Werkzeugmaschine bereitgestellt ist. Die DE 10 2015 115 838 A1 vermag jedoch nicht zu lehren oder nahezulegen, dass ein neuronales Netz zur Werkzeug- bzw. Prozessüberwachung bzw. zur Überwachung eines Betriebszustands der Werkzeugmaschine einsetzbar ist.

Folglich wird gemäß Ausführungsbeispielen der vorliegenden Erfindung vom Stand der Technik abweichend und neu vorgeschlagen, eine Werkzeug- bzw. Prozessüberwachung der Werkzeugmaschine mittels eines an der Steuervorrichtung der Werkzeugmaschine bereitgestellten künstlichen bzw. computer-implementierten neuronalen Netzes durchzuführen.

Eine derartige Werkzeug- bzw. Prozessüberwachung kann vorteilhaft die Maschine und/oder die Werkstücke vor Schäden schützen, kann eine optimale Werkzeugnutzung gewährleisten und kann ggf. Ansatzpunkte für die Prozessoptimierung liefern.

Somit können die Produktivität gesteigert werden und die Gesamtlebenskosten der Werkzeugmaschine verringert werden. Gleichzeitig kann die mögliche Werkzeug- und Prozessüberwachung zur Qualitätssicherung beitragen und ermöglicht Werkstückkontrolle und Qualitäts- bzw. Prozessdokumentation.

Vorteilhaft kann eine unmittelbare Fehler- bzw. Problemerkennung ermöglicht werden (z.B. Kollisionserkennung, Erkennung bei gebrochenem oder verschlissenem bzw. fehlenden Werkzeug) und eine entsprechende Reaktion kann unmittelbar und ohne Verzögerung automatisch ausgelöst werden, z.B. Maschinenstopp bzw. Werkzeugwechsel. Dies ermöglicht auch weitere Kostenreduktionen und verringerten Ausschuss z.B. durch Verschleißabhängige Werkzeugwechsel bzw. Lagerwartungen.

Zudem kann durch beispielhaftes kontinuierliches Anpassen der Prozessparameter auf Grundlage der Ausgabedaten des neuronalen Netzes eine optimierte Bearbeitungsgeschwindigkeit erzielt werden. Weiterhin ergeben sich Vorteile durch die Möglichkeit der Auswertung der historischen Ausgabedaten und der historischen Trainingsdaten z.B. für Dokumentation und Statistik.

Zusammenfassend können in Ausführungsbeispielen insbesondere die folgenden Vorteile erzielt werden: Umfassender Schutz von Maschine, Werkstück und Werkzeug, Überwachung in Echtzeit, optimale Werkzeugausnutzung, Überwachung der Teilequalität (z.B. durch Dokumentation und Prozessanalyse), Verminderung von Ausschuss, und/oder Anpassung auch an komplexe Prozess bzw. Bearbeitungen.

Zudem ergibt sich in Ausführungsbeispielen der Vorteil, dass durch die Möglichkeit der Ausnutzung von an der Maschinensteuerung vorliegenden Daten bzw. Informationen (z.B. Antriebsdaten und/oder Positionierungsdaten) auch eine sensorlose Überwachung bereitgestellt werden kann, bzw. auf zumindest manche bzw. zusätzliche Sensoren verzichtet werden kann. In weiteren Ausführungsbeispielen können die Eingabedaten des neuronalen Netzes mit Sensordaten unterstützt werden bzw. aus Sensordaten bereitgestellt werden, z.B. durch zusätzliche oder alternative Sensorik z.B. für Dehnung, Kraft, Wirkleistung, Drehmoment, Schwingung, Beschleunigung, Körperschall und/oder Temperatur, usw.

Einige beispielhafte Ausgestaltungen der vorliegenden Erfindung werden im Folgenden beschrieben, wobei dies nicht abschließend oder einschränkend aufzufassen ist. Zudem sei darauf verwiesen, dass derartige beispielhafte Aspekte individuell bzw. in Kombination bereitgestellt werden können.

Gemäß beispielhaften bevorzugten Ausführungsformen kann die Überwachungseinrichtung, insbesondere das neuronale Netz der Überwachungseinrichtung, dazu eingerichtet sein, an der Maschinensteuerungseinrichtung vorliegende Steuerungsdaten und/oder an der Maschinensteuerungseinrichtung vorliegende Prozessparameter derart anzupassen, dass eine Bearbeitungsgeschwindigkeit des Bearbeitungsprozesses angepasst wird, insbesondere indem bei dem Bearbeitungsprozess auftretende Vorschubgeschwindigkeiten und/oder Drehzahlen angepasst werden.

Gemäß beispielhaften bevorzugten Ausführungsformen ist die Überwachungseinrichtung, insbesondere das neuronale Netz der Überwachungseinrichtung, dazu eingerichtet, die Prozessparameter des Bearbeitungsprozesses kontinuierlich anzupassen.

Gemäß beispielhaften bevorzugten Ausführungsformen kann die Überwachungseinrichtung, insbesondere das neuronale Netz der Überwachungseinrichtung, bevorzugt dazu eingerichtet sein, die Eingabedaten aus der Maschinensteuerungseinrichtung während des laufenden Bearbeitungsprozesses der Werkstückbearbeitung an der Werkzeugmaschine in Echtzeit einzulesen und/oder den momentanen Betriebszustand der Werkzeugmaschine angebende Ausgabedaten in Echtzeit auszugeben, insbesondere während des laufenden Bearbeitungsprozesses der Werkstückbearbeitung an der Werkzeugmaschine.

Gemäß beispielhaften bevorzugten Ausführungsformen kann die Überwachungseinrichtung, insbesondere das neuronale Netz der Überwachungseinrichtung, dazu eingerichtet sein, die Ausgabedaten des neuronalen Netzes zur Werkzeugüberwachung an der Werkzeugmaschine auszuwerten.

Gemäß beispielhaften bevorzugten Ausführungsformen kann die Überwachungseinrichtung, insbesondere das neuronale Netz der Überwachungseinrichtung, dazu eingerichtet sein, auf Grundlage der Eingabedaten und/oder auf Grundlage einer Auswertung der Ausgabedaten den Bearbeitungsprozess beeinflussende Steuerdaten an die Maschinensteuerungseinrichtung auszugeben.

Gemäß beispielhaften bevorzugten Ausführungsformen kann die Überwachungseinrichtung, insbesondere das neuronale Netz der Überwachungseinrichtung, dazu eingerichtet sein, auf Grundlage der Eingabedaten und/oder auf Grundlage einer Auswertung der Ausgabedaten festzustellen, wenn ein anormaler Betriebszustand der Werkzeugmaschine vorliegt.

Ein anormaler Betriebszustand kann z.B. sein bzw. umfassen: eine Kollision (z.B. von Maschinenteilen, bzw. des Werkzeugs und/oder Werkstücks mit Maschinenteilen), ein (ggf. überhöhter) Werkzeugverschleiß, ein Werkzeugbruch, ein (ggf. überhöhter) Lagerverschleiß, ein Lagerschaden, ein Spannmittelbruch, ein Antriebsschaden, usw.

Gemäß beispielhaften bevorzugten Ausführungsformen kann die Überwachungseinrichtung, insbesondere das neuronale Netz der Überwachungseinrichtung, dazu eingerichtet sein, auf Grundlage der Eingabedaten und/oder auf Grundlage einer Auswertung der Ausgabedaten festzustellen, wenn eine Wahrscheinlichkeit eines eintretenden anormalen Betriebszustands der Werkzeugmaschine einen vorfestgelegten Grenzwert überschreitet.

Gemäß beispielhaften bevorzugten Ausführungsformen kann die Überwachungseinrichtung, insbesondere das neuronale Netz der Überwachungseinrichtung, dazu eingerichtet sein, bei Feststellen, dass ein anormaler Betriebszustand der Werkzeugmaschine vorliegt und/oder eine Wahrscheinlichkeit eines eintretenden anormalen Betriebszustands der Werkzeugmaschine den vorfestgelegten Grenzwert überschreitet, den Bearbeitungsprozess beeinflussende Steuerdaten an die Maschinensteuerungseinrichtung auszugeben.

Gemäß beispielhaften bevorzugten Ausführungsformen kann der anormale Betriebszustand eine an der Werkzeugmaschine auftretende Kollision sein.

Gemäß beispielhaften bevorzugten Ausführungsformen kann der anormale Betriebszustand ein an der Werkzeugmaschine auftretender Werkzeugbruch sein.

Gemäß beispielhaften bevorzugten Ausführungsformen kann der anormale Betriebszustand ein an der Werkzeugmaschine fehlendes, im Bearbeitungsprozess zu verwendendes Werkzeug sein.

Gemäß beispielhaften bevorzugten Ausführungsformen kann die Überwachungseinrichtung, insbesondere das neuronale Netz der Überwachungseinrichtung, dazu eingerichtet sein, bei Feststellen, dass der anormale Betriebszustand der Werkzeugmaschine vorliegt und/oder eine Wahrscheinlichkeit des eintretenden anormalen Betriebszustands der Werkzeugmaschine den vorfestgelegten Grenzwert überschreitet, einen Antriebsstopp und/oder Maschinenstopp auslösende Steuerdaten an die Maschinensteuerungseinrichtung auszugeben, insbesondere bevorzugt derart, dass die Maschinensteuerungseinrichtung auf Grundlage der Steuerdaten einen Antriebsstopp und/oder Maschinenstopp an der Werkzeugmaschine auslöst.

Gemäß beispielhaften bevorzugten Ausführungsformen kann der anormale Betriebszustand ein an der Werkzeugmaschine auftretender erhöhter Werkzeugverschleiß eines im Bearbeitungsprozess verwendeten Werkzeugs bzw. ein einen Grenzwert überschreitender Werkzeugverschleiß des im Bearbeitungsprozess verwendeten Werkzeugs sein.

Gemäß beispielhaften bevorzugten Ausführungsformen kann der anormale Betriebszustand ein an der Werkzeugmaschine auftretender erhöhter Lagerverschleiß eines Lagers der Werkzeugmaschine bzw. ein Lagerschaden an der Werkzeugmaschine sein.

Gemäß beispielhaften bevorzugten Ausführungsformen kann die Überwachungseinrichtung, insbesondere das neuronale Netz der Überwachungseinrichtung, dazu eingerichtet sein, bei Feststellen, dass der anormale Betriebszustand der Werkzeugmaschine vorliegt und/oder eine Wahrscheinlichkeit des eintretenden anormalen Betriebszustands der Werkzeugmaschine den vorfestgelegten Grenzwert überschreitet (insbesondere wenn der anormale Betriebszustand einen erkannten ggf. überhöhten Werkzeugverschleiß oder Werkzeugbruch umfasst), einen automatischen Werkzeugwechsel auslösende Steuerdaten an die Maschinensteuerungseinrichtung auszugeben, insbesondere derart, dass die Maschinensteuerungseinrichtung auf Grundlage der Steuerdaten einen automatischen Werkzeugwechsel an der Werkzeugmaschine auslöst.

Gemäß beispielhaften bevorzugten Ausführungsformen kann die Überwachungseinrichtung, insbesondere das neuronale Netz der Überwachungseinrichtung, dazu eingerichtet sein, auf Grundlage der Eingabedaten und/oder auf Grundlage einer Auswertung der Ausgabedaten an der Maschinensteuerungseinrichtung vorliegende Steuerungsdaten anzupassen.

Gemäß beispielhaften bevorzugten Ausführungsformen können die Eingabedaten Betriebsparameter von Aktoren bzw. Antrieben der Werkzeugmaschine angeben, insbesondere Antriebsdrehzahlen, Motorströme und/oder an Aktoren ausgegebene Aktorsignale.

Gemäß beispielhaften bevorzugten Ausführungsformen können die Eingabedaten Positionswerte von verfahrbaren Bauteilen der Werkzeugmaschine angeben, insbesondere Ist- und/oder Sollpositionen von Linear-, Rund- und/oder Schwenkachsen der Werkzeugmaschine.

Gemäß beispielhaften bevorzugten Ausführungsformen können die Eingabedaten Sensorwerte von Sensoren der Werkzeugmaschine angeben, insbesondere Sensorwerte von Temperatursensoren, Kraftsensoren, Dehnungssensoren, Drehmomentsensoren, Beschleunigungssensoren, Schwingungs- bzw. Vibrationssensoren und/oder Körperschallsensoren.

Gemäß beispielhaften bevorzugten Ausführungsformen kann die Überwachungseinrichtung eine interne Datenspeichereinrichtung aufweisen und/oder zur Kommunikation mit einer externen Datenspeichereinrichtung eingerichtet sein. Bevorzugt kann die Überwachungseinrichtung dazu eingerichtet sein, Eingabedaten und/oder Ausgabedaten des neuronalen Netzes in der internen und/oder externen Datenspeichervorrichtung zu speichern und/oder auf Grundlage einer Auswertung der Eingabedaten und/oder Ausgabedaten des neuronalen Netzes erzeugte Auswertedaten in der internen und/oder externen Datenspeichervorrichtung zu speichern.

Gemäß beispielhaften bevorzugten Ausführungsformen kann die Steuerungsvorrichtung weiterhin eine durch einen Bediener bedienbare Mensch-Maschine-Schnittstelle, insbesondere mit einer graphischen Benutzerschnittstelle, umfassen. Bevorzugt kann die Überwachungseinrichtung dazu eingerichtet sein, den Betriebszustand der Werkzeugmaschine angebende Ausgabedaten des neuronalen Netzes an der Mensch-Maschine-Schnittstelle an den Bediener auszugeben.

Gemäß weiteren Aspekten der vorliegenden Erfindung wird bevorzugt eine Werkzeugmaschine vorgeschlagen, die eine Steuervorrichtung gemäß einem oder mehreren der vorstehenden Aspekte bzw. Ausführungsformen umfasst.

Gemäß weiteren Aspekten der vorliegenden Erfindung wird bevorzugt ein Verfahren zur Überwachung einer numerisch gesteuerten Werkzeugmaschine, insbesondere mittels einer Steuervorrichtung gemäß einem oder mehreren der vorstehenden Aspekte bzw. Ausführungsformen vorgeschlagen.

Bevorzugt umfasst das Verfahren das Steuern von Aktoren der Werkzeugmaschine für einen Bearbeitungsprozess einer Werkstückbearbeitung an der Werkzeugmaschine auf Grundlage von Steuerdaten in Form eines NC-Programms mittels einer Maschinensteuerungseinrichtung, und das Überwachen des Bearbeitungsprozesses der Werkstückbearbeitung an der Werkzeugmaschine mittels einer Überwachungseinrichtung zur Prozessüberwachung während des Steuerns von Aktoren der Werkzeugmaschine für den Bearbeitungsprozess der Werkstückbearbeitung an der Werkzeugmaschine.

Das Überwachen umfasst dabei das Einlesen von Eingabedaten aus der Maschinensteuerungseinrichtung an einem computer-implementierten neuronalen Netze der Überwachungseinrichtung während des laufenden Bearbeitungsprozesses, und das Ausgeben von einen den momentanen Betriebszustand der Werkzeugmaschine bei der Werkstückbearbeitung angebenden Ausgabedaten aus dem neuronalen Netz der Überwachungseinrichtung, und das Auswerten der den momentanen Betriebszustand angebenden Ausgabedaten zur Prozessüberwachung an der Werkzeugmaschine mittels des neuronalen Netzes der Überwachungseinrichtung, und das Anpassen von an der Maschinensteuerungseinrichtung vorliegenden Prozessparametern des Bearbeitungsprozesses, die die Werkstückbearbeitung mittels einer ein Werkzeug oder ein Werkstück tragenden Arbeitsspindel der Werkzeugmaschine betreffen, auf Grundlage der durch das neuronale Netz der Überwachungseinrichtung ausgewerteten Ausgabedaten.

Gemäß weiteren Aspekten der vorliegenden Erfindung wird bevorzugt ein Computerprogrammprodukt vorgeschlagen, umfassend Befehle, die bei der Ausführung des Programms durch einen mit einer numerisch gesteuerten Werkzeugmaschine verbundenen Computer bzw. eine (bevorzugt computer-implementierte) Steuervorrichtung einer numerisch gesteuerten Werkzeugmaschine, insbesondere gemäß einem der vorstehenden Aspekte bzw. Ausführungsformen, diesen bzw. diese veranlassen, das Verfahren gemäß vorstehenden Aspekte bzw. Ausführungsformen auszuführen.

Weitere Aspekte und deren Vorteile als auch Vorteile und speziellere Ausführungsmöglichkeiten der vorstehend beschriebenen Aspekte und Merkmale werden aus den folgenden, jedoch in keiner Weise einschränkend aufzufassenden Beschreibungen und Erläuterungen zu den angehängten Figuren beschrieben.

### Kurzbeschreibung der Figuren

Fig. 1 zeigt eine schematische beispielhafte Darstellung einer numerisch gesteuerten Werkzeugmaschine.
Fig. 2 zeigt eine schematische beispielhafte Darstellung einer Steuervorrichtung einer numerisch gesteuerten Werkzeugmaschine gemäß beispielhaften Ausführungsformen der vorliegenden Erfindung.
Fig. 3 zeigt ein beispielhaftes Ablaufdiagram eines Verfahrens zur Überwachung einer Werkzeugmaschine gemäß beispielhaften Ausführungsformen der vorliegenden Erfindung.

### Detaillierte Beschreibung der Figuren und bevorzugter Ausführungsbeispiele

Im Folgenden werden Beispiele bzw. Ausführungsbeispiele der vorliegenden Erfindung detailliert unter Bezugnahme auf die beigefügten Figuren beschrieben. Gleiche bzw. ähnliche Elemente in den Figuren können hierbei mit gleichen Bezugszeichen bezeichnet sein, manchmal allerdings auch mit unterschiedlichen Bezugszeichen.

Es sei hervorgehoben, dass die vorliegende Erfindung jedoch in keiner Weise auf die im Folgenden beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

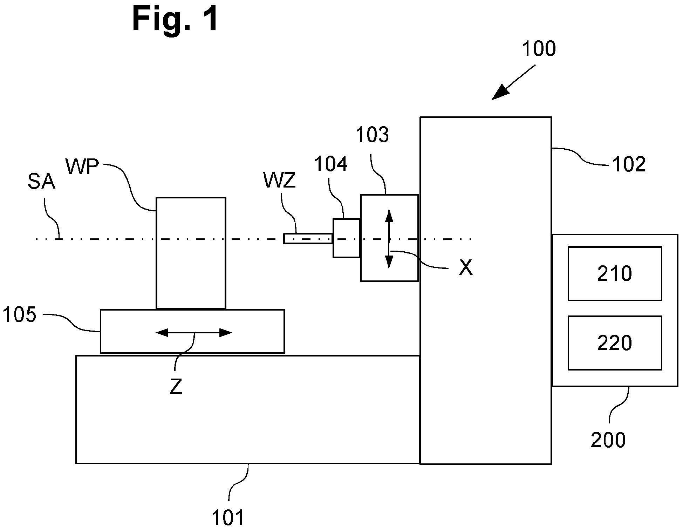

**Fig. 1** zeigt eine schematische beispielhafte Darstellung einer numerisch gesteuerten Werkzeugmaschine 100, beispielhaft als Fräsmaschine ausgebildet.

Die vorliegende Erfindung ist jedoch nicht auf Fräsmaschinen beschränkt, sondern kann zudem auf weiteren Werkzeugmaschinentypen Anwendung finden, z.B. bei zerspanenden Werkzeugmaschinen, die zur Werkstückbearbeitung z.B. durch Bohren, Fräsen, Drehen, Schleifen eingerichtet sind, wie z.B. Fräsmaschinen, Universalfräsmaschinen, Drehmaschinen, Drehzentren, Drehautomaten, Fräs-/Drehmaschinen, Bearbeitungs-zentren, Schleifmaschinen, Verzahnungsmaschinen, usw.

Die Werkzeugmaschine 100 umfasst beispielhaft ein Maschinengestell mit einem Maschinenbett 101 und einem Maschinenständer 102. Beispielhaft ist auf dem Maschinenbett 101 ein verfahrbarer Maschinenschlitten 105 angeordnet, der beispielhaft in eine Z-Richtung horizontal auf dem Maschinenbett 101 verfahrbar gelagert ist (Z-Achse). Auf dem Maschinenschlitten 105, der z.B. einen Werkstücktisch umfassen kann, ist beispielhaft ein Werkstück WP eingespannt. Hierzu können auf dem Maschinenschlitten 105 bzw. Werkzeugtisch auch Spannmittel vorgesehen sein. Zudem kann der Maschinenschlitten 105 in weiteren Ausführungsbeispielen einen Drehtisch umfassen, der um eine vertikale und/oder weitere horizontale Achse dreh- bzw. schwenkbar sein kann (optionale Dreh- bzw. Rund- und/oder Schwenkachse). Weiterhin (oder alternativ) kann der Maschinenschlitten 105 mittels einer Y-Achse in einer (potentiell senkrecht zur Zeichenebene stehenden) horizontalen Y-Richtung verfahren werden.

Der Maschinenständer 102 trägt beispielhaft einen an dem Maschinenständer 102 vertikal in einer X-Richtung verfahrbaren Spindelträgerschlitten 103, an dem eine beispielhaft werkzeugtragende Arbeitsspindel 104 gehalten ist. Die Arbeitsspindel 104 ist dazu eingerichtet, das an der Arbeitsspindel 104 aufgenommene Werkzeug WZ (z.B. ein Bohr- und/oder Fräswerkzeug) um die Spindelachse SA rotierend anzutreiben. Beispielhaft ist der Spindelträgerschlitten 103 mittels einer X-Achse in X-Richtung vertikal verfahrbar. Weiterhin (oder alternativ) kann der Spindelträgerschlitten 103 mittels einer Y-Achse in einer (potentiell senkrecht zur Zeichenebene stehenden) horizontalen Y-Richtung verfahren werden. Zudem kann der Spindelträgerschlitten 103 in weiteren Ausführungsbeispielen eine Dreh- und/oder Schwenkachse umfassen, um die Spindel 104 zu drehen oder zu verschwenken (optionale Dreh- bzw. Rund- und/oder Schwenkachse).

Die Werkzeugmaschine 100 umfasst beispielhaft weiterhin eine Steuervorrichtung 200, die zur Bedienung durch einen Bediener der Werkzeugmaschine 100 beispielhaft einen Bildschirm 210 (z.B. als Touch-Screen ausgebildet) und eine Eingabeeinheit 220 umfasst. Die Eingabeeinheit 220 kann z.B. Mittel zur Nutzereingabe bzw. zum Empfang von Nutzerbefehlen bzw. Befehlhandlungen des Bedieners umfassen, wie z.B. Knöpfe, Schieberegler, Drehregler, eine Tastatur, Schalter, eine Maus, einen Trackball und ggf. auch ein oder mehrere touch-sensitive Flächen (z.B. einen Touch-Screen, kombinierbar mit dem Bildschirm 210).

Über die Steuervorrichtung 200 kann der Bediener den Betrieb der Werkzeugmaschine bzw. Maschinenprozesse an der Werkzeugmaschine steuern und auch einen Betriebszustand der Werkzeugmaschine 100 bzw. den Bearbeitungsprozess während der Bearbeitung überwachen.

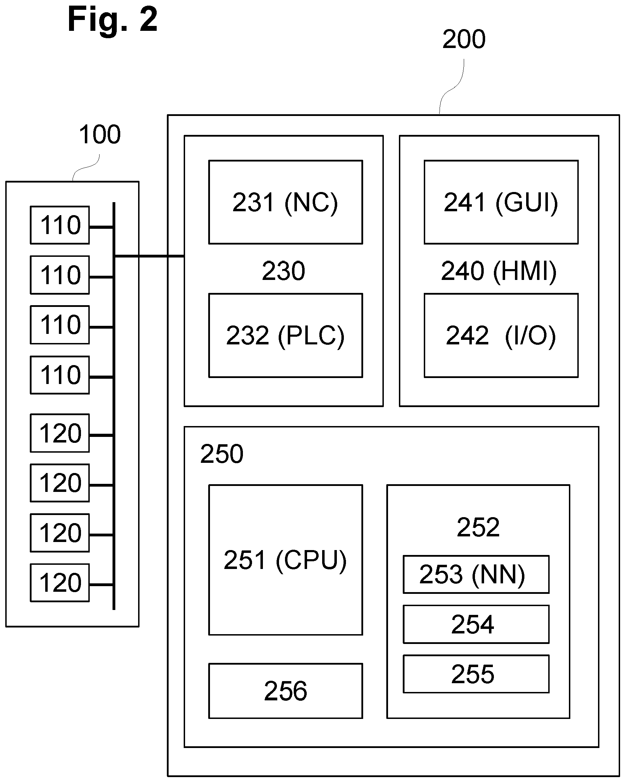

**Fig. 2** zeigt eine schematische beispielhafte Darstellung einer Steuereinrichtung 200 einer numerisch gesteuerten Werkzeugmaschine 100 gemäß beispielhaften Ausführungsformen der vorliegenden Erfindung.

Die Werkzeugmaschine 100 (z.B. die Werkzeugmaschine gemäß Fig. 1) umfasst beispielhaft eine Mehrzahl von durch die Steuereinrichtung 200 steuerbaren Aktoren 110 (z.B. Spindelantrieb, Achsantriebe, usw.) der Werkzeugmaschine 100 und optional eine Mehrzahl von Sensoren 120 zur Ausgabe von einen Maschinenzustand der Werkzeugmaschine 100 betreffenden Sensorsignalen an die Steuereinrichtung 200.

Die Aktoren 110 können z.B. Antriebe von steuerbaren Linear- und Rundachsen (Schwenk- und/oder Drehachsen) für eine gesteuerte Relativbewegung zwischen Werkzeug und Werkstück umfassen, und auch Antriebe von werkzeugtragenden Arbeitsspindeln (z.B. an Fräsmaschinen) bzw. werkstücktragenden Arbeitsspindeln (z.B. an Drehmaschinen).

Des Weiteren können die Aktoren 110 elektronisch, hydraulisch und/oder pneumatisch gesteuerte Ventile, Pumpen oder andere Zuführeinrichtungen von interner oder externer Kühlschmierstoffzuführung bzw. Druckluftzuführungen umfassen. Fördereinrichtungen, Palettenwechsler, Werkstückwechlser, Werkzeugmagazine und anderes Werkzeugmaschinenzubehör kann zudem über Antriebe oder Schaltungen bzw. entsprechende Aktoren gesteuert werden.

Die optionalen Sensoren 120 können z.B. Sensoren sein, die jeweiligen Baugruppen oder Komponenten der Werkzeugmaschine zugeordnet sein können, z.B. den Achsen, den Antrieben, Achslagern, den Spindeln, Spindellagern, einem Werkzeugmagazin, einem Werkzeugwechsler, einem Paletten- oder Werkstückwechsler, einer internen oder externe Kühlschmiermittelzuführeinrichtung, einer Spänefördereinrichtung, und/oder einer Hydraulik- und/oder Pneumatik-Steuerung. Zu den einzelnen Baugruppen können z.B. eine Vielzahl von unterschiedlichen Sensoren bereitgestellt werden, so z.B. Positionsmesssensoren, Strom- und/oder Spannungsmesssensoren, Temperatursensoren, Kraftsensoren, Beschleunigungssensoren, Vibrationssensoren, Lagerdiagnosesensoren, Verlagerungssensoren, Füllstandsanzeigesensoren, Flüssigkeitssensoren (z.B. zum Messen von PH-Werten in Kühlschmiermittelflüssigkeiten, Wasseranteilmesssensoren für Öl, Kühlmittel etc.), Wassergehaltsensoren in Pneumatiksystemen, und/oder Filterzustandssensoren.

Die Steuereinrichtung 200 (Steuervorrichtung) umfasst beispielhaft eine Maschinensteuerung 230 mit einer NC-Steuerung 231 und einer speicherprogrammierbare Steuerung 232 (auch SPS oder PLC für "Programmable Logic Control" genannt).

Weiterhin umfasst die Steuereinrichtung 200 beispielhaft eine Mensch-Maschine-Schnittstelle 240 (auch HMI für "Human-Machine-Interface" genannt), mit der es einem Bediener der Werkzeugmaschine 100 ermöglicht ist, die Werkzeugmaschine 100 zu steuern, zu überwachen und/oder zu bedienen.

Die Mensch-Maschine-Schnittstelle 240 umfasst beispielhaft eine auf einem Monitor oder Touchscreen (z.B. auf dem Bildschirm 210) anzeigbare graphische Benutzeroberfläche 241 (auch GUI für "Graphical User Interface" genannt) sowie eine Eingabe-/Ausgabeeinheit 242 (die die Eingabeeinheit 220 umfassen kann).

Weiterhin umfasst die Steuereinrichtung 200 beispielhaft eine Überwachungseinrichtung 250 zur Überwachung des Betriebszustands der Werkzeugmaschine 100 bzw. zur Überwachung des Bearbeitungsprozesses an der Werkzeugmaschine 100.

Beispielhaft kann die Überwachungseinrichtung 250 an einem mit der NC-Steuerung 231 verbundenen Computer ausgebildet sein. Weiterhin können die Überwachungseinrichtung 250 und die NC-Steuerung 231 gemeinsam auf einem Computer der Steuereinrichtung 200 ausgebildet sein.

Beispielhaft umfasst die Überwachungseinrichtung 250 der Steuereinrichtung 200 einen Prozessor 251 (CPU) zur Datenverarbeitung und Anwendungsausführung und eine Datenspeicherungseinrichtung 252 zur Speicherung von Daten und durch den Prozessor 251 ausführbaren Programmen und Anwendungen.

Weiterhin umfasst die Überwachungseinrichtung 250 beispielhaft eine Kommunikationsschnittstelle 256 zur Kommunikation bzw. zum Datenaustausch mit externen Datenverarbeitungseinrichtungen wie z.B. Servern (z.B. über lokale bzw. globale Kommunikationsnetzwerke bzw. ggf. auch per WLAN).

Beispielhaft ist an der Überwachungseinrichtung 250 ein künstliches bzw. computer-implementiertes neuronales Netz NN ausgebildet. Beispielhaft umfasst die Datenspeicherungseinrichtung 252 eine durch den Prozessor 251 ausführbare Überwachungsanwendung 253, die das neuronale Netz NN umfasst.

Beispielhaft umfasst die Datenspeicherungseinrichtung 252 weiterhin eine Speichereinheit zur Speicherung von Konfigurationsdaten 254 für die Überwachungseinrichtung 250 und eine Speichereinheit zur Speicherung von Trainingsdaten 255 für das neuronale Netz NN der Überwachungsanwendung 253.

Über das Kommunikationssystem der Steuervorrichtung 200 ist die Überwachungseinrichtung 250 beispielhaft dazu eingerichtet, Daten von der Maschinensteuerung 230, insbesondere von der NC-Steuerung 231 und/oder der speicherprogrammierbaren Steuerung 232, auszulesen bzw. zu empfangen.

In bevorzugten Ausführungsbeispielen kann die Überwachungseinrichtung 250 von der Maschinensteuerung 230 ausgelesene bzw. empfangene Daten als Eingabedaten dem neuronalen Netz NN der Überwachungsanwendung 253 zuführen. Dies kann z.B. kontinuierlich bzw. regelmäßig bzw. periodisch und bevorzugt in Echtzeit durchgeführt werden.

Hierbei werden dem neuronalen Netz NN der Überwachungsanwendung 253 bevorzugt insbesondere Antriebsdaten (z.B. Motorstöme und Antriebsignale) und/oder Positionsdaten aus der Maschinensteuerung 230 als Eingabedaten zugeführt.

Weiterhin können dem neuronalen Netz NN der Überwachungsanwendung 253 optional an der Maschinensteuerung vorliegende Sensorsignale von Sensoren der Werkzeugmaschine (z.B. aus der Antriebsregelung, der Stromregelung, der Drehzahlregelung, der Lagerregelung, und/oder der Positionserfassung) als Eingabedaten zugeführt werden. Dies hat den Vorteil, dass keine speziellen für die Prozessüberwachung vorgesehenen Sensoren nötig sind, sondern direkt einige oder sämtliche an der Maschinensteuerung vorliegenden Daten und Informationen ausgenutzt werden können.

Bevorzugt werden die Eingabedaten dem neuronalen Netz NN der Überwachungsanwendung 253 in Echtzeit, d.h. insbesondere bevorzugt während der Werkstückbearbeitung, zugeführt, insbesondere regelmäßig bzw. periodisch bzw. kontinuierlich.

Das neuronalen Netz NN der Überwachungsanwendung 253 ist dazu eingerichtet, auf Grundlage der eingegebenen Eingabedaten (z.B. aus der Maschinensteuerung ausgelesene Eingabedaten bzw. von der Maschinensteuerung zugeführte Eingabedaten), Ausgabedaten auszugeben, die einen Betriebszustand der Werkzeugmaschine 100, insbesondere bei der Werkstückbearbeitung, angeben.

Das neuronale Netz kann hier bereits auf Grundlage von simulierten Prozessbearbeitungen an einer virtuellen Werkzeugmaschine und/oder auf Grundlage des Trainings an einer typgleichen bzw. baugleichen Werkzeugmaschine vortrainiert sein und/oder bei Betrieb der Werkzeugmaschine weitertrainiert werden.

In bevorzugten Ausführungsbeispielen ist die Überwachungseinrichtung 250 bzw. das neuronalen Netz NN der Überwachungsanwendung 253 dazu eingerichtet, die Eingabedaten aus der Maschinensteuerung 230 während des laufenden Bearbeitungsprozesses der Werkstückbearbeitung an der Werkzeugmaschine 100, insbesondere in Echtzeit, einzulesen und den momentanen Betriebszustand der Werkzeugmaschine angebende Ausgabedaten auszugeben.

In bevorzugten Ausführungsbeispielen ist die Überwachungseinrichtung 250 bzw. das neuronalen Netz NN der Überwachungsanwendung 253 dazu eingerichtet, die Ausgabedaten des neuronalen Netzes NN auszuwerten.

In bevorzugten Ausführungsbeispielen ist die Überwachungseinrichtung 250 bzw. das neuronalen Netz NN der Überwachungsanwendung 253 dazu eingerichtet, die Ausgabedaten des neuronalen Netzes NN zur Werkzeugüberwachung und/oder Prozessüberwachung an der Werkzeugmaschine 100 auszuwerten.

In bevorzugten Ausführungsbeispielen ist die Überwachungseinrichtung 250 bzw. das neuronalen Netz NN der Überwachungsanwendung 253 dazu eingerichtet, auf Grundlage der Eingabedaten und/oder auf Grundlage einer Auswertung der Ausgabedaten den Bearbeitungsprozess beeinflussende Steuerdaten an die Maschinensteuerung auszugeben.

In bevorzugten Ausführungsbeispielen ist die Überwachungseinrichtung 250 bzw. das neuronalen Netz NN der Überwachungsanwendung 253 dazu eingerichtet, auf Grundlage der Eingabedaten und/oder auf Grundlage einer Auswertung der Ausgabedaten festzustellen, wenn ein anormaler Betriebszustand der Werkzeugmaschine 100 vorliegt.

In bevorzugten Ausführungsbeispielen ist die Überwachungseinrichtung 250 bzw. das neuronalen Netz NN der Überwachungsanwendung 253 dazu eingerichtet, auf Grundlage der Eingabedaten und/oder auf Grundlage einer Auswertung der Ausgabedaten festzustellen, wenn eine Wahrscheinlichkeit eines eintretenden anormalen Betriebszustands der Werkzeugmaschine 100 einen vorfestgelegten Grenzwert überschreitet.

In bevorzugten Ausführungsbeispielen ist die Überwachungseinrichtung 250 bzw. das neuronalen Netz NN der Überwachungsanwendung 253 dazu eingerichtet, bei Feststellen, dass ein anormaler Betriebszustand der Werkzeugmaschine 100 vorliegt und/oder eine Wahrscheinlichkeit eines eintretenden anormalen Betriebszustands der Werkzeugmaschine den vorfestgelegten Grenzwert überschreitet, den Bearbeitungsprozess beeinflussende Steuerdaten an die Maschinensteuerung 230 auszugeben, z.B. um eine Prozessunterbrechung, einen Maschinenstopp (z.B. wenn als anormaler Betriebszustand eine an der Werkzeugmaschine auftretende Kollision erkannt bzw. festgestellt wird), einen Antriebsstopp, einen Werkzeugwechsel (z.B. wenn als anormaler Betriebszustand ein an der Werkzeugmaschine auftretender Werkzeugbruch oder erhöhter Werkzeugverschleiß erkannt bzw. festgestellt wird, oder wenn erkannt wird, dass das Werkzeug fehlt) usw. auszulösen.

Insbesondere kann die Überwachungseinrichtung 250 bzw. das neuronalen Netz NN der Überwachungsanwendung 253 bevorzugt dazu eingerichtet sein, bei Feststellen, dass eine Kollision vorliegt und/oder eine Wahrscheinlichkeit einer eintretenden Kollision an der Werkzeugmaschine 100 den vorfestgelegten Grenzwert überschreitet, einen Maschinenstopp auslösende Steuerdaten an die Maschinensteuerung 230 auszugeben, insbesondere derart, dass die Maschinensteuerung 230 auf Grundlage der Steuerdaten einen Maschinenstopp an der Werkzeugmaschine 100 auslöst.

Alternativ oder zusätzlich kann die Überwachungseinrichtung 250 bzw. das neuronalen Netz NN der Überwachungsanwendung 253 bevorzugt dazu eingerichtet sein, bei Feststellen, dass ein Werkzeugbruch bzw. erhöhter Werkzeugverschleiß vorliegt und/oder eine Wahrscheinlichkeit des eintretenden Werkzeugbruchs an der Werkzeugmaschine 100 den vorfestgelegten Grenzwert überschreitet, einen automatischen Werkzeugwechsel auslösende Steuerdaten an die Maschinensteuerung 230 auszugeben, insbesondere derart, dass die Maschinensteuerung 230 auf Grundlage der Steuerdaten einen automatischen Werkzeugwechsel an der Werkzeugmaschine 100 auslöst.

Alternativ oder zusätzlich kann die Überwachungseinrichtung 250 bzw. das neuronalen Netz NN der Überwachungsanwendung 253 bevorzugt dazu eingerichtet sein, auf Grundlage der Eingabedaten und/oder auf Grundlage einer Auswertung der Ausgabedaten an der Maschinensteuerung 230 vorliegende Prozessparameter und/oder vorliegende Steuerdaten anzupassen, z.B. derart, dass eine Bearbeitungsgeschwindigkeit des Bearbeitungsprozesses angepasst wird, insbesondere indem bei dem Bearbeitungsprozess auftretende Vorschubgeschwindigkeiten und/oder Drehzahlen angepasst werden. Dies kann insbesondere Vorteilhaft sein, wenn ein überhöhter Lagerverschleiß und/oder abweichende Positionsdaten erkannt werden.

In einigen bevorzugten Ausführungsbeispielen können die aus der Maschinensteuerung 230 bezogenen Eingabedaten für das neuronale Netz NN Betriebsparameter von Aktoren 110 bzw. Antrieben der Werkzeugmaschine 100 angeben, insbesondere bevorzugt Antriebsdrehzahlen, Motorströme und/oder an Aktoren ausgegebene Aktorsignale.

In einigen bevorzugten Ausführungsbeispielen können die aus der Maschinensteuerung 230 bezogenen Eingabedaten für das neuronale Netz NN Positionswerte von verfahrbaren Bauteilen der Werkzeugmaschine angeben, insbesondere Ist- und/oder Sollpositionen von Linear-, Rund- und/oder Schwenkachsen der Werkzeugmaschine 100.

In einigen bevorzugten Ausführungsbeispielen können die aus der Maschinensteuerung 230 bezogenen Eingabedaten für das neuronale Netz NN optional Sensorwerte von Sensoren 120 der Werkzeugmaschine 100 angeben, insbesondere bevorzugt Sensorwerte von Temperatursensoren, Kraftsensoren, Dehnungssensoren, Drehmomentsensoren, Beschleunigungssensoren, Schwingungs- bzw. Vibrationssensoren und/oder Körperschallsensoren.

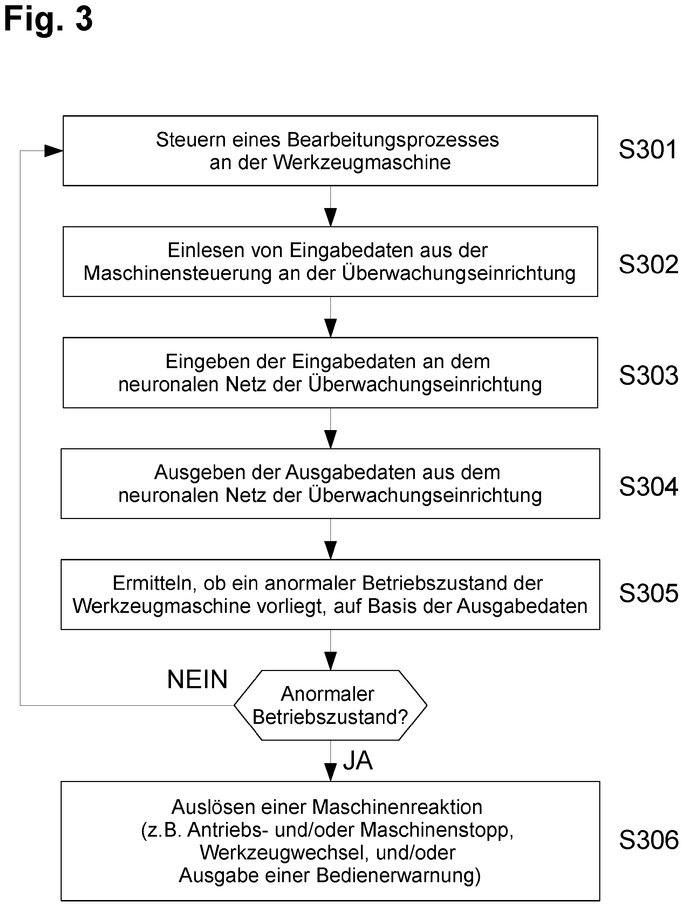

**Fig. 3** zeigt ein beispielhaftes Ablaufdiagram eines Verfahrens zur Überwachung einer Werkzeugmaschine gemäß beispielhaften Ausführungsformen der vorliegenden Erfindung.

In Schritt S301 wird beispielhaft ein Bearbeitungsprozess an der Werkzeugmaschine 100 gesteuert (z.B. Bearbeitung eines Werkstücks an der Werkzeugmaschine z.B. aufgrund von Steuerdaten, wie z.B. eines NC-Programms).

In Schritt S302 werden aus der Maschinensteuerung 230 an der Maschinensteuerung 230 vorliegende Daten bzw. Informationen als Eingabedaten für das neuronale Netz NN ausgelesen. Dies kann bevorzugt kontinuierlich bzw. regelmäßig bzw. periodisch während des Bearbeitungsprozesses durchgeführt werden.

In Schritt S303 werden die aus der Maschinensteuerung 230 ausgelesenen Eingabedaten an dem neuronalen Netz NN der Überwachungseinrichtung 250 eingegeben. Dies kann bevorzugt kontinuierlich bzw. regelmäßig bzw. periodisch während des Bearbeitungsprozesses durchgeführt werden.

In Schritt S304 werden die auf Grundlage der eingegebenen Eingabedaten ermittelten Ausgabedaten des neuronalen Netzes NN ausgegeben.

In Schritt S305 wird auf Grundlage der ausgegebenen Ausgabedaten des neuronalen Netzes NN an der Überwachungseinrichtung 250 ermittelt, ob ein anormaler Betriebszustand der Werkzeugmaschine 100 vorliegt.

Falls kein anormaler Betriebszustand der Werkzeugmaschine 100 vorliegt, wird der Bearbeitungsprozess ununterbrochen weitergeführt (siehe Schritt S301).

Falls aufgrund der Ausgabedaten des neuronalen Netzes NN an der Überwachungseinrichtung 250 ermittelt bzw. festgestellt wird, dass ein anormaler Betriebszustand der Werkzeugmaschine 100 vorliegt bzw. eingetreten ist, wird in Schritt S306 eine entsprechende Maschinenreaktion ausgelöst, z.B. indem die Überwachungseinrichtung 250 ein entsprechendes, die Maschinenreaktion auslösendes Signal an die Maschinensteuerung 230 ausgibt.

Hierbei kann in Abhängigkeit der Ausgabedaten bzw. des festgestellten anormalen Betriebszustands eine entsprechend zugeordnete Maschinenreaktion ausgelöst werden.

Bei Kollisionserkennung kann z.B. direkt und unmittelbar ein Maschinenstopp ausgelöst werden.

Bei Erkennen eines Werkzeugs bzw. eines überhöhten Werkzeugverschleiß (verschlissenes Werkzeug) kann z.B. der Bearbeitungsprozess unterbrochen werden und ein automatischer Werkzeugwechsel ausgelöst werden, z.B. um ein entsprechendes Schwesterwerkzeug einzuwechseln und den Bearbeitungsprozess bei nur sehr geringer Stillstandzeit mit dem eingewechselten Schwesterwerkzeug weiter durchzuführen. Dies hat den Vorteil, dass verschleißabhängige Werkzeugwechsel optimal und bei passendem Zeitpunkt automatisch ausgewechselt werden können, so dass Teilequalität und Werkzeugausnutzung optimal einstellbar sind.

Zudem können ein Maschinenstopp oder ein Antriebsstopp ausgelöst werden, wenn Zustände erkannt werden, die eine Wartung oder manuelle Überprüfung von Maschinenteilen erforderlich machen, wie z.B. das Erkennen eines Lagerschadens oder eines überhöhten Lagerverschleiß.

In Ausführungsbeispielen kann das neuronale Netz im Rahmen eines Fuzzy-Systems durch bidirektionale Umwandlung lernbar gestaltet werden. Zudem können dem neuronalen Netz Trainingsdaten zugeführt werden, wobei die Trainingsdaten auf Basis der Prozessüberwachung simulierter Werkzeugmaschinen erzeugt werden können und/oder auf Basis von bereits in Betrieb stehenden, anderen Werkzeugmaschinen des gleichen Maschinentyps.

Zusammenfassend wird gemäß Ausführungsbeispielen der vorliegenden Erfindung vorgeschlagen, eine Werkzeug- bzw. Prozessüberwachung der Werkzeugmaschine mittels eines an der Steuervorrichtung der Werkzeugmaschine bereitgestellten künstlichen bzw. computer-implementierten neuronalen Netzes durchzuführen. Eine derartige Werkzeug- bzw. Prozessüberwachung kann vorteilhaft die Maschine und/oder die Werkstücke vor Schäden schützen, kann eine optimale Werkzeugnutzung gewährleisten und kann ggf. Ansatzpunkte für die Prozessoptimierung liefern.

Somit können die Produktivität gesteigert werden und die Gesamtlebenskosten der Werkzeugmaschine verringert werden. Gleichzeitig trägt die Werkzeug- und Prozessüberwachung zur Qualitätssicherung bei und ermöglicht Werkstückkontrolle und Qualitäts- bzw. Prozessdokumentation.

Vorteilhaft kann eine unmittelbare Fehler- bzw. Problemerkennung ermöglicht werden (z.B. Kollisionserkennung, Erkennung bei gebrochenem oder verschlissenem bzw. fehlenden Werkzeug) und eine entsprechende Reaktion kann unmittelbar und ohne Verzögerung automatisch ausgelöst werden, z.B. Maschinenstopp bzw. Werkzeugwechsel. Dies ermöglicht auch weitere Kostenreduktionen und verringerten Ausschuss z.B. durch Verschleißabhängige Werkzeugwechsel bzw. Lagerwartungen.

Zudem kann durch kontinuierliches Anpassen der Prozessparameter auf Grundlage der Ausgabedaten des neuronalen Netzes eine optimierte Bearbeitungsgeschwindigkeit erzielt werden. Weiterhin ergeben sich Vorteile durch die Möglichkeit der Auswertung der historischen Ausgabedaten und der historischen Trainingsdaten z.B. für Dokumentation und Statistik.

Zusammenfassend können insbesondere die folgenden Vorteile erzielt werden: Umfassender Schutz von Maschine, Werkstück und Werkzeug, Überwachung in Echtzeit, optimale Werkzeugausnutzung, Überwachung der Teilequalität (z.B. durch Dokumentation und Prozessanalyse), Verminderung von Ausschuss, und Anpassung auch an komplexe Prozess bzw. Bearbeitungen.

Zudem ergibt sich der Vorteil, dass durch die Ausnutzung der an der Maschinensteuerung vorliegenden Daten bzw. Informationen (z.B. Antriebsdaten und/oder Positionierungsdaten) auch eine sensorlose Überwachung bereitgestellt werden kann, bzw. auf zumindest manche Sensoren verzichtet werden kann. In weiteren Ausführungsbeispielen können die Eingabedaten des neuronalen Netzes mit Sensordaten unterstützt werden bzw. aus Sensordaten bereitgestellt werden, z.B. durch zusätzliche oder alternative Sensorik z.B. für Dehnung, Kraft, Wirkleistung, Drehmoment, Schwingung, Beschleunigung, Körperschall und/oder Temperatur, usw.

Vorstehend wurden Beispiele bzw. Ausführungsbeispiele der vorliegenden Erfindung sowie deren Vorteile detailliert unter Bezugnahme auf die beigefügten Figuren beschrieben. Es sei erneut hervorgehoben, dass die vorliegende Erfindungjedoch in keiner Weise auf die vorstehend beschriebenen Ausführungsbeispiele und deren Ausführungsmerkmale begrenzt bzw. eingeschränkt ist, sondern weiterhin Modifikationen der Ausführungsbeispiele umfasst, insbesondere diejenigen, die durch Modifikationen der Merkmale der beschriebenen Beispiele bzw. durch Kombination einzelner oder mehrerer der Merkmale der beschriebenen Beispiele im Rahmen des Schutzumfanges der unabhängigen Ansprüche umfasst sind.

## Patentansprüche

1. Steuervorrichtung zum Einsatz an einer numerisch gesteuerten Werkzeugmaschine, umfassend:
- eine Maschinensteuerungseinrichtung zum Steuern von Aktoren der Werkzeugmaschine für einen Bearbeitungsprozess einer Werkstückbearbeitung an der Werkzeugmaschine auf Grundlage von Steuerdaten in Form eines NC-Programms; und
- eine ein computer-implementiertes neuronales Netz aufweisende Überwachungseinrichtung zur Prozessüberwachung an der Werkzeugmaschine;
wobei die Überwachungseinrichtung dazu eingerichtet ist, Eingabedaten aus der Maschinensteuerungseinrichtung einzulesen und einen Betriebszustand der Werkzeugmaschine angebende Ausgabedaten auszugeben, und
das neuronale Netz der Überwachungseinrichtung dazu eingerichtet ist, zur Prozessüberwachung an der Werkzeugmaschine den Betriebszustand der Werkzeugmaschine angebende Ausgabedaten zur Erkennung von Fehlern im Bearbeitungsprozess auszuwerten,
**dadurch gekennzeichnet, dass**
das neuronale Netz der Überwachungseinrichtung dazu eingerichtet ist, die Eingabedaten aus der Maschinensteuerungseinrichtung während des laufenden Bearbeitungsprozesses der Werkstückbearbeitung einzulesen und Ausgabedaten auszugeben, die einen momentanen Betriebszustand der Werkzeugmaschine bei der Werkstückbearbeitung angeben; und
die Überwachungseinrichtung dazu eingerichtet ist, während des Bearbeitungsprozesses an der Maschinensteuerungseinrichtung vorliegende Prozessparameter des Bearbeitungsprozesses, die die Werkstückbearbeitung mittels einer ein Werkzeug oder ein Werkstück tragenden Arbeitsspindel der Werkzeugmaschine betreffen, auf Grundlage einer Auswertung der den momentanen Betriebszustand der Werkzeugmaschine angebenden Ausgabedaten durch das neuronale Netz anzupassen.

2. Steuervorrichtung gemäß Anspruch 1, **dadurch gekennzeichnet, dass**
die Überwachungseinrichtung, insbesondere das neuronale Netz der Überwachungseinrichtung, dazu eingerichtet ist, die Prozessparameter des Bearbeitungsprozesses derart anzupassen, dass eine Bearbeitungsgeschwindigkeit des Bearbeitungsprozesses angepasst wird, insbesondere derart, dass bei dem Bearbeitungsprozess auftretende Vorschubgeschwindigkeiten und/oder Drehzahlen angepasst werden.

3. Steuervorrichtung gemäß einem der vorstehenden Ansprüche, **dadurch gekennzeichnet, dass**
die Überwachungseinrichtung, insbesondere das neuronale Netz der Überwachungseinrichtung, dazu eingerichtet ist, die Prozessparameter des Bearbeitungsprozesses kontinuierlich anzupassen.

4. Steuervorrichtung gemäß einem der vorstehenden Ansprüche, **dadurch gekennzeichnet, dass**
das neuronale Netz der Überwachungseinrichtung dazu eingerichtet ist, die Eingabedaten aus der Maschinensteuerungseinrichtung während des laufenden Bearbeitungsprozesses der Werkstückbearbeitung an der Werkzeugmaschine in Echtzeit einzulesen und die den momentanen Betriebszustand der Werkzeugmaschine angebenden Ausgabedaten auszugeben.

5. Steuervorrichtung gemäß einem der vorstehenden Ansprüche, **dadurch gekennzeichnet, dass**
die Überwachungseinrichtung, insbesondere das neuronale Netz der Überwachungseinrichtung, weiterhin dazu eingerichtet ist, die den momentanen Betriebszustand der Werkzeugmaschine angebenden Ausgabedaten zur Werkzeugüberwachung an der Werkzeugmaschine auszuwerten.

6. Steuervorrichtung gemäß einem der vorstehenden Ansprüche, **dadurch gekennzeichnet, dass**
die Überwachungseinrichtung, insbesondere das neuronale Netz der Überwachungseinrichtung, dazu eingerichtet ist, auf Grundlage der Eingabedaten aus der Maschinensteuerungseinrichtung und/oder auf Grundlage der Auswertung der den momentanen Betriebszustand der Werkzeugmaschine angebenden Ausgabedaten den Bearbeitungsprozess beeinflussende Steuerdaten an die Maschinensteuerungseinrichtung auszugeben und/oder an der Maschinensteuerungseinrichtung vorliegende Steuerdaten anzupassen.

7. Steuervorrichtung gemäß einem der vorstehenden Ansprüche, **dadurch gekennzeichnet, dass**
die Überwachungseinrichtung, insbesondere das neuronale Netz der Überwachungseinrichtung, dazu eingerichtet ist, auf Grundlage der Eingabedaten aus der Maschinensteuerungseinrichtung und/oder auf Grundlage der Auswertung der den momentanen Betriebszustand der Werkzeugmaschine angebenden Ausgabedaten einen anormalen Betriebszustand der Werkzeugmaschine festzustellen, derart, dass eine an der Werkzeugmaschine auftretende Kollision zwischen Maschinenteilen und einem Werkzeug und/oder dem Werkstück und/oder ein an der Werkzeugmaschine auftretender Werkzeugbruch und/oder ein Fehlen des an der Werkzeugmaschine im Bearbeitungsprozess zu verwendenden Werkzeugs und/oder ein an der Werkzeugmaschine auftretender erhöhter Werkzeugverschleiß eines im Bearbeitungsprozess verwendeten Werkzeugs erkannt wird, wobei die Überwachungseinrichtung, insbesondere das neuronale Netz der Überwachungseinrichtung, ferner dazu eingerichtet ist, bei Feststellen, dass ein anormaler Betriebszustand der Werkzeugmaschine vorliegt, den Bearbeitungsprozess beeinflussende Steuerdaten an die Maschinensteuerungseinrichtung auszugeben.

8. Steuervorrichtung gemäß einem der vorstehenden Ansprüche, **dadurch gekennzeichnet, dass**
die Überwachungseinrichtung, insbesondere das neuronale Netz der Überwachungseinrichtung, dazu eingerichtet ist, auf Grundlage der Eingabedaten aus der Maschinensteuerungseinrichtung und/oder auf Grundlage der Auswertung der den momentanen Betriebszustand der Werkzeugmaschine angebenden Ausgabedaten ein Überschreiten einer Wahrscheinlichkeit eines eintretenden anormalen Betriebszustands der Werkzeugmaschine über einen vorfestgelegten Grenzwert festzustellen, derart, dass eine wahrscheinlich an der Werkzeugmaschine auftretende Kollision zwischen Maschinenteilen und einem Werkzeug und/oder dem Werkstück und/oder ein wahrscheinlich an der Werkzeugmaschine auftretender Werkzeugbruch und/oder ein wahrscheinliches Fehlen des an der Werkzeugmaschine im Bearbeitungsprozess zu verwendenden Werkzeugs und/oder ein einen Grenzwert überschreitender Werkzeugverschleiß des im Bearbeitungsprozess verwendeten Werkzeugs erkannt wird, wobei die Überwachungseinrichtung, insbesondere das neuronale Netz der Überwachungseinrichtung, ferner dazu eingerichtet ist, bei Feststellen, dass die Wahrscheinlichkeit eines eintretenden anormalen Betriebszustands der Werkzeugmaschine den vorfestgelegten Grenzwert überschreitet, den Bearbeitungsprozess beeinflussende Steuerdaten an die Maschinensteuerungseinrichtung auszugeben.

9. Steuervorrichtung gemäß der Ansprüche 7 und 8, **dadurch gekennzeichnet, dass**
die Überwachungseinrichtung, insbesondere das neuronale Netz der Überwachungseinrichtung, dazu eingerichtet ist, bei Feststellen, dass der anormale Betriebszustand der Werkzeugmaschine vorliegt und/oder eine Wahrscheinlichkeit des eintretenden anormalen Betriebszustands der Werkzeugmaschine den vorfestgelegten Grenzwert überschreitet, einen Maschinenstopp auslösende Steuerdaten an die Maschinensteuerungseinrichtung auszugeben, insbesondere derart, dass die Maschinensteuerungseinrichtung auf Grundlage der Steuerdaten einen Maschinenstopp an der Werkzeugmaschine auslöst, und/oder einen automatischen Werkzeugwechsel auslösende Steuerdaten an die Maschinensteuerungseinrichtung auszugeben, insbesondere derart, dass die Maschinensteuerungseinrichtung auf Grundlage der Steuerdaten einen automatischen Werkzeugwechsel an der Werkzeugmaschine auslöst.

10. Steuervorrichtung gemäß einem der vorstehenden Ansprüche, **dadurch gekennzeichnet, dass**
die Eingabedaten aus der Maschinensteuerungseinrichtung Betriebsparameter von Aktoren bzw. Antrieben der Werkzeugmaschine angeben, insbesondere Antriebsdrehzahlen, Motorströme und/oder an Aktoren ausgegebene Aktorsignale, und/oder
die Eingabedaten aus der Maschinensteuerungseinrichtung Positionswerte von verfahrbaren Bauteilen der Werkzeugmaschine angeben, insbesondere Ist- und/oder Sollpositionen von Linear-, Rund- und/oder Schwenkachsen der Werkzeugmaschine, und/oder
die Eingabedaten aus der Maschinensteuerungseinrichtung Sensorwerte von Sensoren der Werkzeugmaschine angeben, insbesondere Sensorwerte von Temperatursensoren, Kraftsensoren, Dehnungssensoren, Drehmomentsensoren, Beschleunigungssensoren, Schwingungs- bzw. Vibrationssensoren und/oder Körperschallsensoren.

11. Steuervorrichtung gemäß einem der vorstehenden Ansprüche, **dadurch gekennzeichnet, dass**
die Überwachungseinrichtung eine interne Datenspeichereinrichtung aufweist und/oder zur Kommunikation mit einer externen Datenspeichereinrichtung eingerichtet ist,
wobei die Überwachungseinrichtung dazu eingerichtet ist, die Eingabedaten aus der Maschinensteuerungseinrichtung und/oder die den momentanen Betriebszustand der Werkzeugmaschine angebenden Ausgabedaten in der internen und/oder externen Datenspeichervorrichtung zu speichern, und/oder
wobei Überwachungseinrichtung dazu eingerichtet ist, auf Grundlage einer Auswertung der Eingabedaten aus der Maschinensteuerungseinrichtung erzeugte Auswertedaten und/oder auf Grundlage der Auswertung der den momentanen Betriebszustand der Werkzeugmaschine angebenden Ausgabedaten durch das neuronale Netz der Überwachungseinrichtung erzeugte Auswertedaten in der internen und/oder externen Datenspeichervorrichtung zu speichern.

12. Steuervorrichtung gemäß einem der vorstehenden Ansprüche, **dadurch gekennzeichnet, dass**
die Steuervorrichtung weiterhin eine durch einen Bediener bedienbare Mensch-Maschine-Schnittstelle, insbesondere mit einer graphischen Benutzerschnittstelle, umfasst,
wobei die Überwachungseinrichtung dazu eingerichtet ist, die den momentanen Betriebszustand der Werkzeugmaschine angebenden Ausgabedaten an der Mensch-Maschine-Schnittstelle an den Bediener auszugeben.

13. Werkzeugmaschine mit einer Steuervorrichtung gemäß einem der vorstehenden Ansprüche.

14. Verfahren zur Überwachung einer numerisch gesteuerten Werkzeugmaschine, insbesondere mittels einer Steuervorrichtung gemäß einem der Ansprüche 1 bis 12, wobei das Verfahren umfasst:
- Steuern von Aktoren der Werkzeugmaschine für einen Bearbeitungsprozess einer Werkstückbearbeitung an der Werkzeugmaschine auf Grundlage von Steuerdaten in Form eines NC-Programms mittels einer Maschinensteuerungseinrichtung;
- Überwachen des Bearbeitungsprozesses der Werkstückbearbeitung an der Werkzeugmaschine mittels einer Überwachungseinrichtung zur Prozessüberwachung während des Steuerns von Aktoren der Werkzeugmaschine für den Bearbeitungsprozess der Werkstückbearbeitung an der Werkzeugmaschine,
wobei das Überwachen umfasst:
- Einlesen von Eingabedaten aus der Maschinensteuerungseinrichtung an einem computer-implementierten neuronalen Netz der Überwachungseinrichtung während des laufenden Bearbeitungsprozesses;
- Ausgeben von einen den momentanen Betriebszustand der Werkzeugmaschine bei der Werkstückbearbeitung angebenden Ausgabedaten aus dem neuronalen Netz der Überwachungseinrichtung;
- Auswerten der den momentanen Betriebszustand angebenden Ausgabedaten zur Prozessüberwachung an der Werkzeugmaschine mittels des neuronalen Netzes der Überwachungseinrichtung;
- Anpassen von an der Maschinensteuerungseinrichtung vorliegenden Prozessparametern des Bearbeitungsprozesses, die die Werkstückbearbeitung mittels einer ein Werkzeug oder ein Werkstück tragenden Arbeitsspindel der Werkzeugmaschine betreffen, während des Bearbeitungsprozesses auf Grundlage der durch das neuronale Netz der Überwachungseinrichtung ausgewerteten Ausgabedaten.

15. Computerprogrammprodukt, umfassend Befehle, die bei der Ausführung des Programms durch einen mit einer numerisch gesteuerten Werkzeugmaschine verbundenen Computer bzw. eine Steuervorrichtung einer numerisch gesteuerten Werkzeugmaschine, insbesondere gemäß einem der Ansprüche 1 bis 12, diesen bzw. diese veranlassen, das Verfahren gemäß Anspruch 14 auszuführen.

## Claims

1. Control device for use on a numerically controlled machine tool, comprising:
- a machine control device for controlling actuators of the machine tool for a machining process of workpiece machining on the machine tool based on control data in the form of an NC program; and
- a monitoring device comprising a computer-implemented neural network for process monitoring on the machine tool;
wherein the monitoring device is configured to read input data from the machine control device and to output output data indicating an operating state of the machine tool, and
the neural network of the monitoring device is configured to evaluate output data indicating the operating state of the machine tool for process monitoring at the machine tool in order to detect errors in the machining process,
**characterized in that**
the neural network of the monitoring device is configured to read the input data from the machine control device during the ongoing machining process of workpiece machining and to output output data indicating a current operating state of the machine tool during workpiece machining; and
the monitoring device is configured to adapt process parameters of the machining process at the machine control device, which relate to the workpiece machining carried out by means of a working spindle of the machine tool carrying a tool or a workpiece, on the basis of an evaluation of the output data indicating the current operating state of the machine tool by the neural network, during the machining process.

2. Control device according to claim 1, **characterized in that**
the monitoring device, in particular the neural network of the monitoring device, is configured to adapt the process parameters of the machining process in such a way that a machining speed of the machining process is adapted, in particular in such a way that feed rates and/or rotational speeds occurring in the machining process are adapted.

3. Control device according to any one of the preceding claims, **characterized in that**
the monitoring device, in particular the neural network of the monitoring device, is configured to continuously adjust the process parameters of the machining process.

4. Control device according to any one of the preceding claims, **characterized in that**
the neural network of the monitoring device is configured to read the input data from the machine control device in real time during the ongoing machining process of the workpiece machining on the machine tool and to output the output data indicating the current operating state of the machine tool.

5. Control device according to any one of the preceding claims, **characterized in that**
the monitoring device, in particular the neural network of the monitoring device, is further configured to evaluate the output data indicating the current operating state of the machine tool for tool monitoring at the machine tool.

6. Control device according to any one of the preceding claims, **characterized in that**
the monitoring device, in particular the neural network of the monitoring device, is configured to output control data influencing the machining process to the machine control device on the basis of the input data from the machine control device and/or on the basis of the evaluation of the output data indicating the current operating state of the machine tool and/or to adapt control data present at the machine control device.

7. Control device according to any one of the preceding claims, **characterized in that** the monitoring device, in particular the neural network of the monitoring device, is configured to detect an abnormal operating state of the machine tool on the basis of the input data from the machine control device and/or on the basis of the evaluation of the output data indicating the current operating state of the machine tool, in such a way, that a collision occurring at the machine tool between machine parts and a tool and/or the workpiece and/or a tool breakage occurring at the machine tool and/or a lack of the tool to be used at the machine tool in the machining process and/or increased tool wear occurring at the machine tool of a tool used in the machining process is detected, wherein the monitoring device, in particular the neural network of the monitoring device, is further configured to output control data influencing the machining process to the machine control device in case that presence of an abnormal operating state of the machine tool is determined.

8. Control device according to any one of the preceding claims, **characterized in that**
the monitoring device, in particular the neural network of the monitoring device, is configured to determine, on the basis of the input data from the machine control device and/or on the basis of the evaluation of the output data indicating the current operating state of the machine tool, that a probability of an occurring abnormal operating state of the machine tool has exceeded a predefined limit value, in such a way, **in that** a collision between machine parts and a tool and/or the workpiece which is likely to occur at the machine tool and/or a tool breakage which is likely to occur at the machine tool and/or a probable absence of the tool to be used at the machine tool in the machining process and/or tool wear of the tool used in the machining process which exceeds a limit value is detected, wherein the monitoring device, in particular the neural network of the monitoring device, is further configured to output control data influencing the machining process to the machine control device in case it is determined that the probability of an occurring abnormal operating state of the machine tool exceeds the predefined limit value.

9. Control device according to claims 7 and 8, **characterized in that**
the monitoring device, in particular the neural network of the monitoring device, is configured to output control data triggering a machine stop to the machine control device in case it is determined that the abnormal operating state of the machine tool is present and/or a probability of the occurring abnormal operating state of the machine tool exceeds the predefined limit value, in particular in such a way that the machine control device triggers a machine stop on the machine tool on the basis of the control data, and/or to output control data triggering an automatic tool change to the machine control device, in particular in such a way that the machine control device triggers an automatic tool change on the machine tool on the basis of the control data.

10. Control device according to any one of the preceding claims, **characterized in that**
the input data from the machine control device indicate operating parameters of actuators or drives of the machine tool, in particular drive speeds, motor currents and/or actuator signals output to actuators, and/or
the input data from the machine control device indicate position values of movable components of the machine tool, in particular actual and/or nominal positions of linear, rotary and/or swivel axes of the machine tool,
and/or
the input data from the machine control device indicate sensor values of sensors of the machine tool, in particular sensor values of temperature sensors, force sensors, strain sensors, torque sensors, acceleration sensors, oscillation or vibration sensors and/or structure-borne sound sensors.

11. Control device according to any one of the preceding claims, **characterized in that**
the monitoring device has an internal data storage device and/or is configured for communication with an external data storage device,
wherein the monitoring device is configured to store the input data from the machine control device and/or the output data indicating the current operating state of the machine tool in the internal and/or external data storage device, and/or
wherein the monitoring device is configured to store evaluation data generated on the basis of an evaluation of the input data from the machine control device and/or to store evaluation data generated on the basis of the evaluation of the output data indicating the current operating state of the machine tool by the neural network of the monitoring device in the internal and/or external data storage device.

12. Control device according to any of the preceding claims, **characterized in that**
the control device further comprises a man-machine interface operable by an operator, in particular with a graphical user interface,
wherein the monitoring device is configured to output the output data indicating the current operating state of the machine tool to the operator at the man-machine interface.

13. Machine tool comprising a control device according to any of the preceding claims.

14. Method for monitoring a numerically controlled machine tool, in particular by means of a control device according to any one of claims 1 to 12, wherein the method comprises:
- controlling actuators of the machine tool for a machining process of workpiece machining on the machine tool based on control data in the form of an NC program by means of a machine control device;
- monitoring the machining process of workpiece machining on the machine tool by means of a monitoring device for process monitoring during controlling the actuators of the machine tool for the machining process of workpiece machining on the machine tool,
wherein the monitoring includes:
- reading input data from the machine control device at a computer-implemented neural network of the monitoring device during the ongoing machining process;
- outputting output data indicating the current operating state of the machine tool during workpiece machining from the neural network of the monitoring device;
- evaluating the output data indicating the current operating state for process monitoring on the machine tool by means of the neural network of the monitoring device;
- adapting process parameters of the machining process, which are present at the machine control device and are related to workpiece machining by means of a working spindle of the machine tool carrying a tool or a workpiece, on the basis of the output data evaluated by the neural network of the monitoring device, during the machining process.

15. Computer program product comprising instructions which, when the program is executed by a computer connected to a numerically controlled machine tool, or by a control device of a numerically controlled machine tool, in particular according to any one of claims 1 to 12, causes it to execute the method according to claim 14.

## Revendications

1. Dispositif de commande destiné à être utilisé sur une machine-outil à commande numérique, comprenant :
- un système de commande de machine pour commander des actionneurs de la machine-outil pour un processus d'usinage d'un usinage de pièce sur la machine-outil sur la base de données de commande sous forme d'un programme de commande numérique ; et
- un système de surveillance présentant un réseau neuronal implémenté par ordinateur pour la surveillance de processus sur la machine-outil ;
dans lequel le système de surveillance est conçu pour lire des données d'entrée provenant du système de commande de machine et pour délivrer des données de sortie indiquant un état de fonctionnement de la machine-outil, et
le réseau neuronal du système de surveillance est conçu, pour la surveillance de processus sur la machine-outil, pour évaluer les données de sortie indiquant l'état de fonctionnement de la machine-outil pour la détection d'erreurs dans le processus d'usinage,
**caractérisé en ce que**
le réseau neuronal du système de surveillance est conçu pour lire les données d'entrée provenant du système de commande de machine pendant le processus d'usinage en cours de l'usinage de pièce et pour délivrer des données de sortie qui indiquent un état de fonctionnement momentané de la machine-outil lors de l'usinage de pièce ; et
le système de surveillance est conçu pour adapter les paramètres de processus du processus d'usinage présents sur le système de commande de machine pendant le processus d'usinage, qui concernent l'usinage de pièce au moyen d'une broche de travail de la machine-outil portant un outil ou une pièce, sur la base d'une évaluation des données de sortie indiquant l'état de fonctionnement momentané de la machine-outil à l'aide du réseau neuronal.

2. Dispositif de commande selon la revendication 1, **caractérisé en ce que**
le système de surveillance, en particulier le réseau neuronal du système de surveillance, est conçu pour adapter les paramètres de processus du processus d'usinage de telle sorte qu'une vitesse d'usinage du processus d'usinage est adaptée, en particulier de telle sorte que les vitesses d'avance et/ou vitesses de rotation se produisant lors du processus d'usinage sont adaptées.

3. Dispositif de commande selon l'une quelconque des revendications précédentes, **caractérisé en ce que**
le système de surveillance, en particulier le réseau neuronal du système de surveillance, est conçu pour adapter les paramètres de processus du processus d'usinage en continu.

4. Dispositif de commande selon l'une quelconque des revendications précédentes, **caractérisé en ce que**
le réseau neuronal du système de surveillance est conçu pour lire les données d'entrée provenant du système de commande de machine pendant le processus d'usinage en cours de l'usinage de pièce sur la machine-outil en temps réel et pour délivrer les données de sortie indiquant l'état de fonctionnement momentané de la machine-outil.

5. Dispositif de commande selon l'une quelconque des revendications précédentes, **caractérisé en ce que**
le système de surveillance, en particulier le réseau neuronal du système de surveillance, est conçu en outre pour évaluer les données de sortie indiquant l'état de fonctionnement momentané de la machine-outil pour la surveillance d'outil sur la machine-outil.

6. Dispositif de commande selon l'une quelconque des revendications précédentes, **caractérisé en ce que**
le système de surveillance, en particulier le réseau neuronal du système de surveillance, est conçu, sur la base des données d'entrée provenant du système de commande de machine et/ou sur la base de l'évaluation des données de sortie indiquant l'état de fonctionnement momentané de la machine-outil, pour délivrer les données de commande influençant le processus d'usinage au système de commande de machine et/ou pour adapter les données de commande présentes au système de commande de machine.

7. Dispositif de commande selon l'une quelconque des revendications précédentes, **caractérisé en ce que**
le système de surveillance, en particulier le réseau neuronal du système de surveillance, est conçu, sur la base des données d'entrée provenant du système de commande de machine et/ou sur la base de l'évaluation des données de sortie indiquant l'état de fonctionnement momentané de la machine-outil, pour constater un état de fonctionnement anormal de la machine-outil, de telle sorte qu'une collision se produisant sur la machine-outil entre des parties de la machine et un outil et/ou la pièce et/ou une cassure d'outil se produisant sur la machine-outil et/ou une absence de l'outil à utiliser dans le processus d'usinage sur la machine-outil et/ou une usure d'outil accrue d'un outil utilisé dans le processus d'usinage se produisant sur la machine-outil est identifiée, dans lequel le système de surveillance, en particulier le réseau neuronal du système de surveillance, est conçu en outre, lorsqu'il est constaté qu'un état de fonctionnement anormal de la machine-outil est présent, pour délivrer des données de commande influençant le processus d'usinage au système de commande de machine.

8. Dispositif de commande selon l'une quelconque des revendications précédentes, **caractérisé en ce que**
le système de surveillance, en particulier le réseau neuronal du système de surveillance, est conçu, sur la base des données d'entrée provenant du système de commande de machine et/ou sur la base de l'évaluation des données de sortie indiquant l'état de fonctionnement momentané de la machine-outil, pour constater un dépassement d'une probabilité d'un état de fonctionnement anormal de la machine-outil survenant au-dessus d'une valeur limite prédéfinie, de telle sorte qu'une collision se produisant probablement sur la machine-outil entre des parties de la machine et un outil et/ou la pièce et/ou une cassure d'outil se produisant probablement sur la machine-outil et/ou une absence probable de l'outil à utiliser dans le processus d'usinage sur la machine-outil et/ou une usure d'outil de l'outil utilisé dans le processus d'usinage dépassant une valeur limite est identifiée, dans lequel le système de surveillance, en particulier le réseau neuronal du système de surveillance, est conçu en outre, lorsqu'il est constaté que la probabilité d'un état de fonctionnement anormal de la machine-outil survenant dépasse la valeur limite prédéfinie, pour délivrer des données de commande influençant le processus d'usinage au système de commande de machine.

9. Dispositif de commande selon les revendications 7 et 8, **caractérisé en ce que**
le système de surveillance, en particulier le réseau neuronal du système de surveillance, est conçu, lorsqu'il est constaté que l'état de fonctionnement anormal de la machine-outil est présent et/ou qu'une probabilité de l'état de fonctionnement anormal de la machine-outil survenant dépasse la valeur limite prédéfinie, pour délivrer des données de commande déclenchant un arrêt de la machine au système de commande de machine, en particulier de telle sorte que le système de commande de machine sur la base des données de commande déclenche un arrêt de la machine sur la machine-outil, et/ou pour délivrer des données de commande déclenchant un changement d'outil automatique au système de commande de machine, en particulier de telle sorte que le système de commande de machine sur la base des données de commande déclenche un changement d'outil automatique sur la machine-outil.

10. Dispositif de commande selon l'une quelconque des revendications précédentes, **caractérisé en ce que**
les données d'entrée provenant du système de commande de machine indiquent des paramètres de fonctionnement d'actionneurs ou d'entraînements de la machine-outil, en particulier des vitesses de rotation d'entraînement, courants de moteur et/ou signaux d'actionneur délivrés aux actionneurs, et/ou
les données d'entrée provenant du système de commande de machine indiquent des valeurs de position de composants déplaçables de la machine-outil, en particulier des positions réelles et/ou théoriques d'axes linéaires, rotatifs et/ou de pivotement de la machine-outil, et/ou
les données d'entrée provenant du système de commande de machine indiquent des valeurs de capteur de capteurs de la machine-outil, en particulier des valeurs de capteur de capteurs de température, capteurs de force, capteurs de contrainte, capteurs de couple, capteurs d'accélération, capteurs d'oscillation ou de vibration et/ou capteurs de bruits solidiens.

11. Dispositif de commande selon l'une quelconque des revendications précédentes, **caractérisé en ce que**
le système de surveillance présente un système de stockage de données interne et/ou est conçu pour la communication avec un système de stockage de données externe,
dans lequel le système de surveillance est conçu pour stocker les données d'entrée provenant du système de commande de machine et/ou les données de sortie indiquant l'état de fonctionnement momentané de la machine-outil dans le dispositif de stockage de données interne et/ou externe, et/ou
dans lequel le système de surveillance est conçu pour stocker les données d'évaluation produites sur la base d'une évaluation des données d'entrée provenant du système de commande de machine et/ou les données d'évaluation produites par le réseau neuronal du système de surveillance sur la base de l'évaluation des données de sortie indiquant l'état de fonctionnement momentané de la machine-outil dans le dispositif de stockage de données interne et/ou externe.

12. Dispositif de commande selon l'une quelconque des revendications précédentes, **caractérisé en ce que**
le dispositif de commande comprend en outre une interface homme-machine pouvant être utilisée par un opérateur, en particulier avec une interface utilisateur graphique,
dans lequel le système de surveillance est conçu pour délivrer à l'opérateur les données de sortie indiquant l'état de fonctionnement momentané de la machine-outil sur l'interface homme-machine.

13. Machine-outil avec un dispositif de commande selon l'une quelconque des revendications précédentes.

14. Procédé pour la surveillance d'une machine-outil à commande numérique, en particulier au moyen d'un dispositif de commande selon l'une quelconque des revendications 1 à 12, dans lequel le procédé comprend :
- la commande d'actionneurs de la machine-outil pour un processus d'usinage d'un usinage de pièce sur la machine-outil sur la base de données de commande sous forme d'un programme de commande numérique au moyen d'un système de commande de machine ;
- la surveillance du processus d'usinage de l'usinage de pièce sur la machine-outil au moyen d'un système de surveillance pour la surveillance de processus pendant la commande d'actionneurs de la machine-outil pour le processus d'usinage de l'usinage de pièce sur la machine-outil,
dans lequel la surveillance comprend :
- la lecture de données d'entrée provenant du système de commande de machine sur un réseau neuronal implémenté par ordinateur du système de surveillance pendant le processus d'usinage en cours ;
- la délivrance de données de sortie indiquant un état de fonctionnement momentané de la machine-outil lors de l'usinage de pièces à partir du réseau neuronal du système de surveillance ;
- l'évaluation des données de sortie indiquant l'état de fonctionnement momentané pour la surveillance de processus sur la machine-outil au moyen du réseau neuronal du système de surveillance ;
- l'adaptation de paramètres de processus du processus d'usinage présents sur le système de commande de machine, qui concernent l'usinage de pièce au moyen d'une broche de travail de la machine-outil portant un outil ou une pièce, pendant le processus d'usinage sur la base des données de sortie évaluées par le réseau neuronal du système de surveillance.

15. Produit-programme d'ordinateur, comprenant des instructions qui, lors de l'exécution du programme par un ordinateur connecté à une machine-outil à commande numérique ou un dispositif de commande d'une machine-outil à commande numérique, en particulier selon l'une quelconque des revendications 1 à 12, exécutent celui-ci ou amènent celui-ci à exécuter le procédé selon la revendication 14.
